# EUROPEAN PATENT APPLICATION

(11) **EP 3 716 438 A1**
(43) Date of publication of application: **30.09.2020**
(21) Application number: 18880985.9
(22) Date of filing: 19.11.2018
(51) Int. Cl.: H02J 7/00

(54) **ISOLATION SYSTEM FOR BATTERY PACKS OF BATTERY CHARGING AND SWAPPING STATION, BATTERY CHARGING AND SWAPPING STATION AND ISOLATION METHOD**

(30) Priority: 23.11.2017 CN 201711179782
(71) Applicant: NIO Nextev Limited, Central, Hong Kong (HK)
(72) Inventor: ZHAO, Jincheng, Shanghai 201804 (CN)
(74) Representative: Vossius & Partner Patentanwälte Rechtsanwälte mbB
(86) International application number: PCT/CN2018/116133
(87) International publication number: WO 2019/101029

(57) **Abstract**

Disclosed are an isolation system and isolation method for battery packs (6) in a battery charging and swap station, and a battery charging and swap station. The battery charging and swap station comprises a battery rack (2), a plurality of battery packs (6) being placed on the battery rack (2). The isolation system comprises: an acquisition subsystem configured to obtain at least thermal runaway information of the battery pack (6); a battery conveying subsystem configured to convey a battery pack (6) experiencing thermal runaway to an isolation position; and a control subsystem connected to the acquisition subsystem and the battery conveying subsystem, respectively, and configured to control, when the battery pack (6) is in a thermal runaway state, the battery conveying subsystem to transport the battery pack (6) experiencing thermal runaway to the isolation position. According to the above technical solution, the battery pack (6) experiencing thermal runaway can be accurately positioned and transported to the isolation position, so that the positioning accuracy of the isolation system is improved, and secondary hazards can be effectively avoided.

## Description

### Technical Field

The invention relates to the field of battery charging and swapping, and in particular to an isolation system and isolation method for battery packs in a battery charging and swap station, and a battery charging and swap station.

### Background Art

In recent years, with the continuous development of new energy vehicles, energy supply for the new energy vehicles has also become an issue that concerns all major manufacturers. Taking an electric vehicle as an example, in many powering-up modes, due to the advantages of having little damage to a battery pack and a capability of providing a convenient and fast powering-up experience for vehicle owners, a battery swap solution has become a solution favored by all major manufacturers. The battery swap solution is generally completed in a battery charging and swap station. Specifically, the battery charging and swap station is configured with a battery rack, a battery swap platform, and a battery swap robot between the battery rack and the battery swap platform, such as a stacker or a rail guided vehicle (RGV), that carries a fresh/used traction battery. The battery swap robot completes the action of replacing a traction battery for an electric vehicle parked on the battery swap platform by reciprocating on a rail previously laid between the battery rack and the battery swap platform. A plurality of battery packs are densely placed on the battery rack, and the battery pack is a flammable explosive material due to its high energy density. Therefore, once a thermal runaway event such as a fire or an explosion occurs in a battery pack, the fire easily spreads to other batteries, resulting in disastrous consequences.

In order to solve the above problems, in the prior art, a thermal runaway detection device (such as a temperature sensor) and a fire extinguishing device (such as a gas fire extinguisher) are usually configured near a battery rack. Once the detection device detects an abnormality, the fire extinguishing device is immediately enabled to extinguish a fire. Although the above method improves the safety of a battery pack during thermal runaway to a certain extent, main defects of this method lie in that: because the temperature sensor is disposed near a battery pack and monitors one or more battery packs at the same time, a temperature change and a specific position inside a battery pack experiencing thermal runaway cannot be quickly and accurately learned immediately, and no accurate and quick fire extinguishing measures can thus be taken in this method. In addition, once the fire cannot be extinguished in a timely and effective manner, secondary hazards will be easily caused, resulting in serious fire accidents. In other words, the existing fire control method for thermal runaway of battery packs has the problems of a low positioning accuracy and a poor fire extinguishing effect.

Correspondingly, a new isolation system and isolation method for battery packs in a battery charging and swap station are required in the art to solve the above problems.

### Summary of the Invention

In order to solve the above problems in the prior art, that is, to solve the problems of a low positioning accuracy and a poor fire extinguishing effect of the existing fire control method for thermal runaway of a battery pack, the invention provides an isolation system for battery packs in a battery charging and swap station, wherein the battery charging and swap station comprises a battery rack, and a plurality of battery packs are placed on the battery rack, the isolation system comprising: an acquisition subsystem configured to obtain at least thermal runaway information of the battery pack; a battery conveying subsystem configured to transport a battery pack experiencing thermal runaway to an isolation position; and a control subsystem connected to the acquisition subsystem and the battery conveying subsystem, respectively, and configured to control, when the battery pack is in a thermal runaway state, the battery conveying subsystem to transport the battery pack experiencing thermal runaway to the isolation position.

In the above preferred technical solution of the isolation system for battery packs in a battery charging and swap station, the thermal runaway information comprises the temperature of internal cells in the battery pack and/or the concentration of smoke near the battery pack.

In the above preferred technical solution of the isolation system for battery packs in a battery charging and swap station, the acquisition subsystem comprises the same number of battery management units and/or smoke detectors as the battery packs, each of the battery packs being correspondingly configured with one battery management unit and/or one smoke detector, wherein the battery management unit is disposed in the battery pack or the battery rack and configured to obtain the temperature of internal cells in the battery pack; and the smoke detector is disposed at an exhaust port of the battery pack that is close to the battery rack and configured to obtain the concentration of smoke near the battery pack.

In the above preferred technical solution of the isolation system for battery packs in a battery charging and swap station, each of the battery packs is configured with one battery management unit and one smoke detector, and the acquisition subsystem further comprises a charging control unit configured in each of the battery packs, wherein the charging control unit is connected to the control subsystem, and the battery management unit and smoke detector corresponding to the battery pack, respectively, and configured to receive the thermal runaway information, determine the state of the battery pack based on the thermal runaway information, and upload the state of the battery pack to the control subsystem.

In the above preferred technical solution of the isolation system for battery packs in a battery charging and swap station, the battery conveying subsystem comprises a battery swap robot, which is configured to transport the battery pack experiencing thermal runaway from the battery rack to the isolation position.

In the above preferred technical solution of the isolation system for battery packs in a battery charging and swap station, the battery conveying subsystem further comprises a battery transfer unit disposed on the battery rack, which is configured to transfer the battery pack experiencing thermal runaway from the battery rack to the battery swap robot.

In the above preferred technical solution of the isolation system for battery packs in a battery charging and swap station, the control subsystem is further provided with a smoke detector, which is configured to obtain the concentration of smoke near the control subsystem.

The invention further provides a battery charging and swap station, which comprises a battery rack, a plurality of battery packs being placed on the battery rack. The battery charging and swap station further comprises an isolation system for isolating a battery pack experiencing thermal runaway, the isolation system being an isolation system for battery packs in a battery charging and swap station in any one of the above solutions.

The invention further provides an isolation method for battery packs in a battery charging and swap station, wherein the battery charging and swap station comprises a battery rack, and a plurality of battery packs are placed on the battery rack, the isolation method comprising:
obtaining thermal runaway information of the battery pack;
determining the state of the battery pack based on the thermal runaway information; and
transporting, when the battery pack is in a thermal runaway state, a battery pack experiencing thermal runaway to an isolation position,
wherein the thermal runaway information comprises the temperature of internal cells in the battery pack and/or the concentration of smoke near the battery pack.

In the above preferred technical solution of the isolation method for battery packs in a battery charging and swap station, the step of "determining the state of the battery pack based on the thermal runaway information" further comprises:
determining, when the temperature of internal cells reaches a first set threshold and/or the concentration of smoke reaches a second set threshold, that the battery pack is in the thermal runaway state.

A person skilled in the art can understand that in the preferred technical solutions of the invention, the isolation system for battery packs in a battery charging and swap station comprises an acquisition subsystem, a battery conveying subsystem, and a control subsystem. The acquisition subsystem is configured to obtain at least thermal runaway information of the battery pack; the battery conveying subsystem is configured to transport a battery pack experiencing thermal runaway to an isolation position; and the control subsystem is connected to the acquisition subsystem and the battery conveying subsystem, respectively, and configured to control, when the battery pack is in a thermal runaway state, the battery conveying subsystem to transport the battery pack experiencing thermal runaway to the isolation position. The thermal runaway information comprises the temperature of internal cells in the battery pack and/or the concentration of smoke near the battery pack. By acquiring the temperature of internal cells in the battery pack and/or the concentration of smoke near the battery pack, the isolation system of the invention can be used to detect the thermal runaway information of the battery pack from a thermal runaway source of the battery pack, and find and accurately position the battery pack experiencing thermal runaway in time, thereby improving the positioning accuracy of the isolation system. In addition, by disposing the battery conveying subsystem, the battery pack experiencing thermal runaway can be quickly transported to the isolation position after the battery pack experiencing thermal runaway is found in time, so as to isolate the battery pack experiencing thermal runaway from other battery packs, thereby effectively avoiding secondary hazards and improving the safety of the battery charging and swap station. In other words, by disposing the isolation system, the problems of a low positioning accuracy and a poor fire extinguishing effect of the fire control method for thermal runaway of a battery pack in the prior art can be solved.

Specifically, the acquisition subsystem comprises a battery management unit, a smoke detector, and a charging control unit that are configured in each of the battery packs, and the battery conveying subsystem comprises a battery swap robot and a battery transfer unit disposed on the battery rack. When thermal runaway occurs in the battery pack, the battery management unit obtains the temperature of internal cells in the battery pack immediately, the smoke detector acquires the concentration of smoke at the exhaust port of the battery pack, and the charging control unit determines, based on the temperature of internal cells and the concentration of smoke, that the battery pack is in the thermal runaway state, and uploads the result to the control subsystem in time, so that the control subsystem can quickly and accurately position the battery experiencing thermal runaway based on the determination result. Further, the control subsystem then controls, by sending an instruction to the battery transfer unit and the battery swap robot, the battery transfer unit to transfer the battery pack experiencing thermal runaway from the battery rack to the battery swap robot, and then the battery swap robot transports the battery pack experiencing thermal runaway from the battery rack to the isolation position, so that the battery experiencing thermal runaway is isolated, thereby avoiding secondary hazards and improving the safety.

### Brief Description of the Drawings

An isolation system and isolation method for battery packs in a battery charging and swap station, and a battery charging and swap station of the invention are described below with reference to the accompanying drawings. In the accompanying drawings:
FIG. 1 is a schematic structural diagram of an isolation system for battery packs in a battery charging and swap station of the invention;
FIG. 2 is a schematic structural diagram of a battery charging and swap station of the invention; and
FIG. 3 is a schematic flowchart of an isolation method for battery packs in a battery charging and swap station of the invention.

### List of reference numerals

1. Battery swap platform; 2. Battery rack; 3. Charging control cabinet; 4. Main control cabinet; 5. Battery swap robot; 6. Battery pack; 7. Rail; 8. Fire door; 9. Isolation device.

### Detailed Description of Embodiments

Preferred embodiments of the invention are described below with reference to the accompanying drawings. It should be understood by a person skilled in the art that these embodiments are only for explaining the technical principles of the invention and are not intended to limit the scope of protection of the invention. For example, although the battery management unit (BMS) in the drawings is disposed inside the battery pack, this positional relationship is not inalterable and can be adjusted by a person skilled in the art as required so as to adapt to specific application scenarios. For example, the battery management unit may be disposed outside the battery pack and electrically connected to the battery pack.

It should be noted that in the description of the invention, the terms, such as "center", "upper", "lower", "left", "right", "vertical", "horizontal", "inner" and "outer", that indicate directions or positional relationships are based on the directions or positional relationships shown in the drawings only for convenience of description, and do not indicate or imply that the device or element must have a specific orientation, be constructed and operated in a specific orientation, and therefore cannot be understood as limitation to the invention. In addition, the terms "first", "second" and "third" are for descriptive purposes only and should not be construed as indicating or implying relative importance.

In addition, it should also be noted that, in the description of the invention, the terms "mount", "engage" and "connect" should be interpreted in a broad sense unless explicitly defined and limited otherwise, which, for example, can mean a fixed connection, a detachable connection or an integral connection; can mean a mechanical connection or an electrical connection; and can mean a direct connection, an indirect connection by means of an intermediary, or internal communication between two elements. For a person skilled in the art, the specific meaning of the above terms in the invention can be interpreted according to the specific situation.

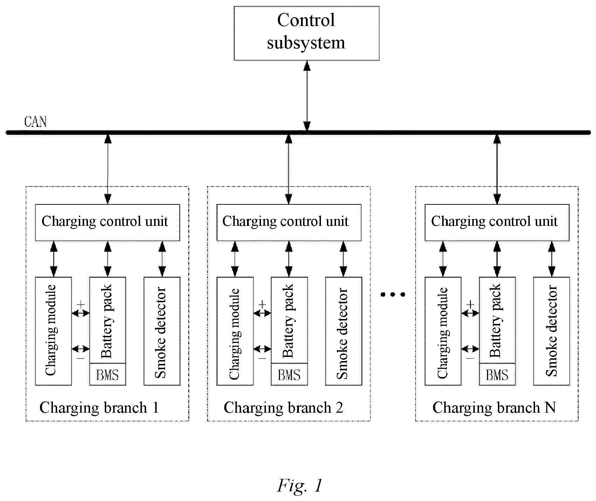

First, referring to FIG. 1, FIG. 1 is a schematic structural diagram of an isolation system for battery packs in a battery charging and swap station of the invention. As shown in FIG. 1, in order to solve the problems of a low positioning accuracy and a poor fire extinguishing effect of the existing fire control method for thermal runaway of a battery pack, the isolation system for battery packs in a battery charging and swap station of the invention comprises an acquisition subsystem, a battery conveying subsystem, and a control subsystem. The acquisition subsystem is configured to obtain thermal runaway information of the battery pack, and determine, based on the information, whether the battery pack is in a thermal runaway state; the battery conveying subsystem is configured to transport a battery pack experiencing thermal runaway to an isolation position; and the control subsystem is connected to the acquisition subsystem and the battery conveying subsystem, respectively, and configured to control, when the battery pack is in a thermal runaway state, the battery conveying subsystem to transport the battery pack experiencing thermal runaway to the isolation position. The thermal runaway information comprises the temperature of internal cells in the battery pack and/or the concentration of smoke near the battery pack. The isolation position may be a dedicated position, set inside/outside the battery charging and swap station, at which the battery pack experiencing thermal runaway is handled, and an isolation device or a fire extinguishing equipment is disposed at the position, such as an isolation sandbox disposed inside/outside the battery charging and swap station or a closed room with a gas fire extinguishing device.

It can be learned from the above description that, by acquiring the temperature of internal cells in the battery pack and/or the concentration of smoke near the battery pack, the isolation system of the invention can be used to detect the thermal runaway information of the battery pack from a heat generation source of the battery pack, and find and accurately position the battery pack experiencing thermal runaway in time, thereby improving the positioning accuracy of the isolation system. In addition, by disposing the battery conveying subsystem, the battery pack experiencing thermal runaway can be quickly transported to the isolation position after the battery pack experiencing thermal runaway is found in time, so as to isolate the battery pack experiencing thermal runaway from other battery packs, thereby effectively avoiding secondary hazards and improving the safety of the battery charging and swap station. In other words, by disposing the isolation system, the problems of a low positioning accuracy and a poor fire extinguishing effect of the fire control method for thermal runaway of a battery pack in the prior art can be solved.

With continued reference to FIG. 1, specifically, the acquisition subsystem preferably comprises the same number of battery management units (BMS), smoke detectors, and charging control units as the battery packs, each of the battery packs corresponding to one of the battery management units, one of the smoke detectors, and one of the charging control units respectively. The battery management unit is disposed inside the battery pack and configured to obtain the temperature of internal cells in the battery pack; the smoke detector is disposed at an exhaust port of the battery pack and configured to obtain the concentration of smoke near the battery pack; and the charging control unit is connected to the control subsystem, the battery management unit, and the smoke detector, respectively, and configured to collect temperature information of internal cells and concentration information of smoke, determine, based on the above information, whether the battery pack is in the thermal runaway state, and upload the state of the battery pack to the control subsystem. The battery conveying subsystem preferably comprises a battery swap robot configured to transport the battery pack experiencing thermal runaway from the battery rack to the isolation position, and a battery transfer unit configured to transfer the battery pack experiencing thermal runaway on the battery rack from the battery rack to the battery swap robot.

When thermal runaway occurs in the battery pack, the battery management unit obtains the temperature of internal cells in the battery pack immediately, the smoke detector acquires the concentration of smoke at the exhaust port of the battery pack, and the charging control unit determines, based on the temperature of internal cells and the concentration of smoke, that the battery pack is in the thermal runaway state, and uploads the determination result to the control subsystem in time, so that the control subsystem not only quickly and accurately positions the battery experiencing thermal runaway based on the determination result, but also controls, by sending an instruction to the battery transfer unit and the battery swap robot, the battery transfer unit to transfer the battery pack experiencing thermal runaway from the battery rack to the battery swap robot, and then the battery swap robot transports the battery pack experiencing thermal runaway from the battery rack to the isolation position, thereby completing the isolation from the battery experiencing thermal runaway.

The above arrangement has the following advantages: by detecting a change in the temperature of internal cores in the battery pack and obtaining the concentration of smoke at the exhaust port of the battery pack, the invention can make it possible to greatly improve the determination speed and positioning accuracy during thermal runaway of the battery. This is because the battery packs are all provided with an exhaust port, and once a thermal runaway phenomenon such as a fire or an explosion occurs in the battery, the temperature of internal cells in the battery pack first rises, and the generated smoke is definitely to be discharged from the exhaust port first. Therefore, by obtaining the temperature of internal cells in the battery pack, the thermal runaway information of the battery pack can be obtained from a heat generation source of the battery pack and the exhaust port of the battery pack in time, thereby improving the positioning speed and accuracy of the isolation system. In addition, with the reasonable utilization of the existing resources such as the battery transfer unit and the battery swap robot in the battery charging and swap station, the invention can make it possible to not only transport the battery pack experiencing thermal runaway to the isolation position in time so as to avoid secondary hazards, but also greatly reduce the construction cost of the isolation system. This is because there is a certain time lag between the firing of the battery pack to the spreading of the fire, during which time lag, the battery pack is on fire only internally, but other parts of the battery swap station can still function properly. Therefore, in the invention, this time lag is fully used to finish timely transportation and isolation of the battery experiencing thermal runaway, thereby improving the safety of the battery charging and swap station.

A person skilled in the art can understand that the above arrangement is only for explaining the principle of the invention, and is not intended to limit the scope of protection of the invention. Without departing from the principles of the invention, a person skilled in the art can make any form of adjustment to the above arrangement, so that the isolation system of the invention is applicable to more specific application scenarios. For example, the battery management unit (BMS) may also be disposed on a battery rack outside the battery pack and electrically connected to the battery pack. For another example, it is the control subsystem that completes the function of determining whether thermal runaway occurs in the battery pack, and the charging control unit is configured to only collect thermal runaway information and transmit the information to the control subsystem.

In addition, although this embodiment is described with each battery pack configured with both one battery management unit and one smoke detector, a person skilled in the art can understand that the purposes of improving the positioning speed and accuracy of the isolation system of the invention can be achieved, even if each battery pack is configured with only one battery management unit or one smoke detector. Correspondingly, when each battery pack is configured with only one battery management unit, the thermal runaway information is the temperature of internal cells in the battery pack; and when each battery pack is configured with only one smoke detector, the thermal runaway information is the concentration of smoke near the battery pack.

In another preferred embodiment, in order to improve the stability of the isolation system, a smoke detector may be further disposed on the control subsystem and is configured to obtain the concentration of smoke near the control subsystem, for further determination in connection with the thermal runaway information acquired by the acquisition subsystem, thereby avoiding erroneous determination. For example, when a smoke alarm at the exhaust port of the battery pack fails, the control subsystem can still determine, according to the temperature of internal cells that is detected by the battery management unit in the battery pack and the concentration of smoke that is detected by a second smoke detector, that the battery pack is in the thermal runaway state.

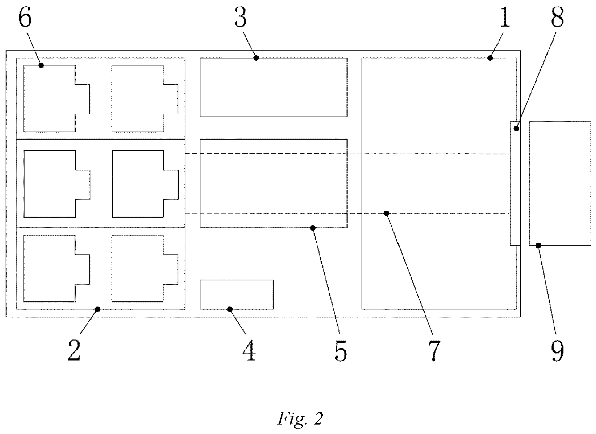

Next, referring to FIG. 2, FIG. 2 is a schematic structural diagram of a battery charging and swap station of the invention. As shown in FIG. 2, in one possible embodiment, the battery charging and swap station of the invention comprises a battery swap platform 1, a battery rack 2, a charging control cabinet 3, a main control cabinet 4, and a battery swap robot 5. The battery rack 2 is provided with a battery transport unit (not shown in the figures) and a plurality of battery packs 6, each of the battery packs 6 being internally provided with a battery management unit (not shown in the figures), and a smoke detector (not shown in the figures) being disposed around each of the battery packs 6. The charging control cabinet 3 is provided with a charging control unit (not shown in the figures) corresponding to each of the battery packs 6, the main control cabinet 4 is provided with a control subsystem (not shown in the figures), and a rail 7 is laid under the battery swap robot 5, wherein a fire door 8 is provided at the end of the rail 7, and an isolation position is outside the fire door 8, an isolation device 9 (such as an isolation sandbox) for isolating a battery pack experiencing thermal runaway being disposed at the position. The battery management unit, the smoke detector, the charging control unit, the battery swap robot 5, the battery transport unit, and the control subsystem constitute the isolation system of the invention.

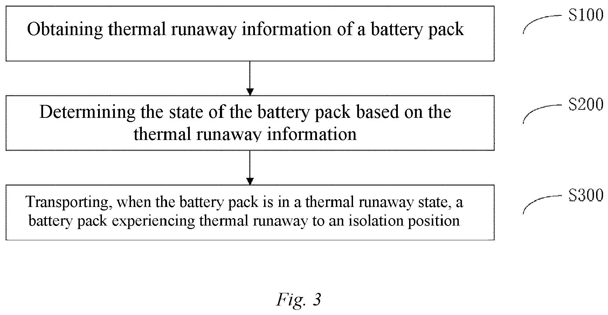

Next, referring to FIG. 3, FIG. 3 is a schematic flowchart of an isolation method for battery packs in a battery charging and swap station of the invention. As shown in FIG. 3, the isolation method for battery packs in a battery charging and swap station mainly comprises the following steps:

S 100: obtaining thermal runaway information of the battery pack, for example, the thermal runaway information comprising the temperature of internal cells in the battery pack and/or the concentration of smoke near the battery pack, which involves obtaining the temperature of internal battery cells by means of a battery management unit (BMS), and/or obtaining the concentration of smoke at an exhaust port of the battery by means of a smoke detector;

S200: determining the state of the battery pack based on the thermal runaway information, for example, a charging control unit determining, based on the temperature of internal cells in the battery pack and/or the concentration of smoke near the battery pack, whether the battery pack is in a thermal runaway state; and

S300: transporting, when the battery pack is in a thermal runaway state, a battery pack experiencing thermal runaway to an isolation position, for example, when the charging control unit determines that the battery pack is in the thermal runaway state, a control subsystem controlling a battery transfer unit to transfer the battery pack to a battery swap robot, and the battery swap robot then transporting the battery pack to an isolation position outside the battery charging and swap station through a guide rail.

Step S200 may further comprise:
determining, when the temperature of internal cells reaches a first set threshold and/or the concentration of smoke at the exhaust port reaches a second set threshold, that the battery pack is in the thermal runaway state.

A method for determining whether thermal runaway occurs in a battery pack is described below with reference to Table 1.

**Table 1 Table for Determining Thermal Runaway of Battery Packs**

| | | | | |
|---|---|---|---|---|
| **Concentration of smoke** | Too high | Normal | Too high | Normal |
| **Temperature of internal cores** | Too high | Normal | Normal | Still too high |
| **Fire** | Thermal runaway | Normal | This branch is normal, but thermal runaway occurs in other branches | Thermal runaway occurs and the smoke detector fails |

In Table 1, "too high" indicates that the temperature of internal cells/the concentration of smoke reaches or exceeds the first/second set threshold, and "normal" indicates that the temperature of internal cells/the concentration of smoke does not reach or is less than the first/second set threshold.

Definitely, Table 1 above is only one possible embodiment, and without departing from the principles of the invention, any method for determining the thermal runaway of a battery pack based on the temperature of internal cells and/or the concentration of smoke falls within the scope of protection of the invention.

The process of the isolation method of the invention is described below with reference to FIGs. 2 and 3, by taking a one-time isolation process of a battery pack experiencing thermal runaway as an example:
the battery management unit and the smoke detector respectively obtaining the temperature of internal cells in the battery pack 6 and the concentration of smoke near the battery pack → the charging control unit determining whether the battery pack 6 is in a thermal runaway state → when it is determined that the battery pack 6 is in a thermal runaway state, uploading the determination result to the control subsystem → the control subsystem quickly cutting off a charging power circuit of the battery pack 6 and instructing to pull a charging plug of the battery pack 6 out of a battery compartment → the control subsystem enabling the fire door 8 to be opened, and at the same time enabling the battery swap robot 5 to arrive at the battery rack 2 and finish docking → while the battery swap robot 5 is docked with the battery rack 2, the control subsystem controlling the battery transfer unit to transfer the battery pack experiencing thermal runaway to the battery swap robot 5 → the control subsystem controlling the battery swap robot 5 to quickly transport the battery pack experiencing thermal runaway to an isolation position, so that the battery pack 6 enters an isolation sandbox 9.

Heretofore, the technical solutions of the invention have been described with reference to the preferred embodiments shown in the accompanying drawings; however, a person skilled in the art can readily understand that the scope of protection of the invention is obviously not limited to these particular embodiments. A person skilled in the art may make equivalent changes or substitutions to related technical features without departing from the principles of the invention, and the technical solutions after these changes or substitutions will all fall within the scope of protection of the invention.

## Claims

1. An isolation system for battery packs in a battery charging and swap station, the battery charging and swap station comprising a battery rack, and a plurality of battery packs being placed on the battery rack, **characterized in that** the isolation system comprises:
an acquisition subsystem configured to obtain at least thermal runaway information of the battery pack;
a battery conveying subsystem configured to transport a battery pack experiencing thermal runaway to an isolation position; and
a control subsystem connected to the acquisition subsystem and the battery conveying subsystem, respectively, and configured to control, when the battery pack is in a thermal runaway state, the battery conveying subsystem to transport the battery pack experiencing thermal runaway to the isolation position.

2. The isolation system for battery packs in a battery charging and swap station according to claim 1, **characterized in that** the thermal runaway information comprises the temperature of internal cells in the battery pack and/or the concentration of smoke near the battery pack.

3. The isolation system for battery packs in a battery charging and swap station according to claim 2, **characterized in that** the acquisition subsystem comprises the same number of battery management units and/or smoke detectors as the battery packs, each of the battery packs being correspondingly configured with one battery management unit and/or one smoke detector,
wherein the battery management unit is disposed in the battery pack or the battery rack and configured to obtain the temperature of internal cells in the battery pack; and
the smoke detector is disposed at an exhaust port of the battery pack that is close to the battery rack and configured to obtain the concentration of smoke near the battery pack.

4. The isolation system for battery packs in a battery charging and swap station according to claim 3, **characterized in that** each of the battery packs is configured with one battery management unit and one smoke detector, and the acquisition subsystem further comprises a charging control unit configured in each of the battery packs, wherein the charging control unit is connected to the control subsystem, and the battery management unit and smoke detector corresponding to the battery pack, respectively, and configured to receive the thermal runaway information, determine the state of the battery pack based on the thermal runaway information, and upload the state of the battery pack to the control subsystem.

5. The isolation system for battery packs in a battery charging and swap station according to any one of claims 1 to 4, **characterized in that** the battery conveying subsystem comprises a battery swap robot, which is configured to transport the battery pack experiencing thermal runaway from the battery rack to the isolation position.

6. The isolation system for battery packs in a battery charging and swap station according to claim 5, **characterized in that** the battery conveying subsystem further comprises a battery transfer unit disposed on the battery rack, which is configured to transfer the battery pack experiencing thermal runaway from the battery rack to the battery swap robot.

7. The isolation system for battery packs in a battery charging and swap station according to claim 6, **characterized in that** the control subsystem is further provided with a smoke detector, which is configured to obtain the concentration of smoke near the control subsystem.

8. A battery charging and swap station comprising a battery rack, a plurality of battery packs being placed on the battery rack, **characterized in that** the battery charging and swap station further comprises an isolation system for isolating a battery pack experiencing thermal runaway, the isolation system being an isolation system for battery packs in a battery charging and swap station according to any one of claims 1 to 7.

9. An isolation method for battery packs in a battery charging and swap station, the battery charging and swap station comprising a battery rack, and a plurality of battery packs being placed on the battery rack, **characterized in that** the isolation method comprises:
obtaining thermal runaway information of the battery pack;
determining the state of the battery pack based on the thermal runaway information; and
transporting, when the battery pack is in a thermal runaway state, a battery pack experiencing thermal runaway to an isolation position,
wherein the thermal runaway information comprises the temperature of internal cells in the battery pack and/or the concentration of smoke near the battery pack.

10. The isolation method for battery packs in a battery charging and swap station according to claim 9, **characterized in that** the step of "determining the state of the battery pack based on the thermal runaway information" further comprises:
determining, when the temperature of internal cells reaches a first set threshold and/or the concentration of smoke reaches a second set threshold, that the battery pack is in the thermal runaway state.
